# EUROPÄISCHE PATENTSCHRIFT

(11) **EP 2 208 044 B1**
(45) Veröffentlichungstag und Bekanntmachung des Hinweises auf die Patenterteilung: **14.11.2018**
(21) Anmeldenummer: 08850238.0
(22) Anmeldetag: 07.11.2008
(51) Int. Cl.: G01Q 60/10, G01Q 30/12, G01Q 30/10

(54) **VERFAHREN ZUR UNTERSUCHUNG EINER PROBE DURCH RASTERTUNNELMIKROSKOPIE MIT ANWENDUNG EINES KONTRASTMITTELS**
METHOD OF INVESTIGATION OF A SAMPLE BY SCANNING TUNNEL MICROSCOPY USING A CONTRAST MEANS
PROCÉDÉ D'EXAMEN D'UN ÉCHANTILLON PAR MICROSCOPIE À BALAYAGE EN EFFET TUNNEL QUI UTILISE UN MOYEN DE CONTRASTE

(30) Priorität: 15.11.2007 EP 07022154
(43) Veröffentlichungstag der Anmeldung: 21.07.2010
(73) Patentinhaber: Forschungszentrum Jülich GmbH, 52425 Jülich (DE)
(72) Erfinder: TEMIROV, Ruslan, 50999 Köln (DE); SUBACH, Sergey, 52066 Aachen (DE); TAUTZ, Frank, Stefan, 52066 Aachen (DE)
(86) Internationale Anmeldenummer: PCT/EP2008/009391
(87) Internationale Veröffentlichungsnummer: WO 2009/062631

(56) Entgegenhaltungen:
- US-A- 5 497 000
- MITSUI T ET AL: "Coadsorption and interactions of O and H on Pd(111)" SURFACE SCIENCE ELSEVIER NETHERLANDS, Bd. 511, Nr. 1-3, 10. Juni 2002 (2002-06-10), Seiten 259-266, XP002513426 ISSN: 0039-6028
- RASMUSSEN P B ET AL: "The Reactor STM: A scanning tunneling microscope for investigation of catalytic surfaces at semi-industrial reaction conditions" REVIEW OF SCIENTIFIC INSTRUMENTS, AIP, MELVILLE, NY, US, Bd. 69, Nr. 11, 1. November 1998 (1998-11-01), Seiten 3879-3884, XP012036120 ISSN: 0034-6748
- GUPTA J A ET AL: "Strongly coverage-dependent excitations of adsorbed molecular hydrogen" PHYSICAL REVIEW B (CONDENSED MATTER AND MATERIALS PHYSICS) APS THROUGH AIP USA, Bd. 71, Nr. 11, 15. März 2005 (2005-03-15), Seiten 115416-1-115416-5, XP002513427 ISSN: 0163-1829
- PARKER M -C ET AL: "Hydrogen bonding molecules and their effect on scanning tunneling microscope image contrast of covalently immobilized protein molecules" JOURNAL OF VACUUM SCIENCE & TECHNOLOGY B (MICROELECTRONICS AND NANOMETER STRUCTURES) AIP FOR AMERICAN VACUUM SOC USA, Bd. 14, Nr. 2, März 1996 (1996-03), Seiten 1432-1437, XP002513428 ISSN: 0734-211X
- DENG Z T ET AL: "Selective analysis of molecular states by functionalized scanning tunneling microscopy tips" PHYSICAL REVIEW LETTERS APS USA, Bd. 96, Nr. 15, 21. April 2006 (2006-04-21), Seiten 156102/1-4, XP002513429 ISSN: 0031-9007
- NOLL J D ET AL: "FLOW INJECTION SYSTEM FOR THE SCANNING TUNNELING MICROSCOPE" REVIEW OF SCIENTIFIC INSTRUMENTS, AIP, MELVILLE, NY, US, Bd. 66, Nr. 8, 1. August 1995 (1995-08-01), Seiten 4150-4156, XP000525610 ISSN: 0034-6748
- COOMBS J H ET AL: "Properties of vacuum tunneling currents: anomalous barrier heights" IBM JOURNAL OF RESEARCH AND DEVELOPMENT USA, Bd. 30, Nr. 5, September 1986 (1986-09), Seiten 455-459, XP001329902 ISSN: 0018-8646
- WILMS M ET AL: "A new and sophisticated electrochemical scanning tunneling microscope design for the investigation of potentiodynamic processes" REVIEW OF SCIENTIFIC INSTRUMENTS, AIP, MELVILLE, NY, US, Bd. 70, Nr. 9, 1. September 1999 (1999-09-01), Seiten 3641-3650, XP012037650 ISSN: 0034-6748
- TEMIROV R ET AL: "A novel method achieving ultra-high geometrical resolution in scanning tunnelling microscopy" NEW JOURNAL OF PHYSICS, INSTITUTE OF PHYSICS PUBLISHING, BRISTOL, GB, Bd. 10, Nr. 5, 1. Mai 2008 (2008-05-01), Seite 53012, XP020137768 ISSN: 1367-2630

## Beschreibung

Die Erfindung bezieht sich auf ein Verfahren zur Untersuchung einer Probe.
Aus Binnig und Rohrer ist bekannt, die Oberfläche einer Probe mittels eines Rastertunnelmikroskops (STM, Scanning Tunneling Microscope) abzubilden (G. Binnig, H. Rohrer, "Scanning tunneling microscopy -frombirth to adolescence", (1987), Reviews of Modern Physics 59, 615).
Die Theorie der Rastertunnelmikroskopie ist bekannt. Bei der rastertunnelmikroskopischen Messung wird eine elektrisch leitende Spitze oder auch Nadel des Mikroskops systematisch in einem Raster über das ebenfalls leitende Untersuchungsobjekt gefahren. Die Spitze und die Objektoberfläche sind dabei nicht in elektrischem Kontakt, und wegen des isolierenden Mediums dazwischen, z. B. Luft oder Vakuum, findet bei makroskopischem Abstand kein Stromfluss statt. Nähert man jedoch die Spitze der Oberfläche auf atomare Größenordnungen an, so überlagern sich die quantenmechanischen Zustände der Elektronen (Orbitale) von der Oberfläche und der Spitze, so dass mit einer Wahrscheinlichkeit größer Null ein Austausch von Elektronen auftritt, was bei Anlegen einer kleinen Spannung zu einem Tunnelstrom mittels Tunneleffekt führt. Dieser Tunnelstrom ist sehr empfindlich auf kleinste Abstandsänderungen, da die Intensität negativ exponentiell mit dem Abstand skaliert.
Es sind verschiedene Messmodi für die Rastertunnelmikroskopie bekannt. Bei der Messung mit konstanter Höhe, wird die Höhe der Spitze konstant gehalten und der Tunnelstrom variiert im Verlauf des Abrasterns. Dieser Modus ermöglicht ein schnelles Abrastern der Oberfläche, allerdings bei einer erhöhten Gefahr des Abbrechens der Nadel durch große Strukturunterschiede in der Probe. Bei einem Messmodus mit konstantem Tunnelstrom wird der Tunnelstrom durch einen Regelkreis konstant gehalten und die Spitze folgt der Oberfläche. Die Auflösung ist bei diesen Verfahren hoch, so dass die elektronische Struktur der Oberfläche auf atomarer Skala abgebildet wird.

Aus Tersoff und Hamann (J. Tersoff and D. R. Hamann (1985), Physical Review B 31, 805) "Theory of the scanning tunneling microscope" ist bekannt, dass mittels Rastertunnelmikroskopie die lokale elektronische Zustandsdichte (LDOS: local density of states) im Bereich der Valenzelektronen abgebildet wird, die chemisch unspezifisch ist und deren Strukturen über mehrere Atome ausgedehnt sein können.
Es hat verschiedene Ansätze gegeben, das Rastertunnelmikroskop auch mit einer chemischen Sensitivität auszustatten. So ist aus Stipe et al. (B. C. Stipe, M. A. Rezaei, and W. Ho (1998), Science 280, 1732) "Single-Molecule Vibrational Spectroscopy and Microscopy" die Ausnutzung des inelastischen Tunnelprozesses als Möglichkeit der lokalen, ortsaufgelösten Schwingungsspektroskopie bekannt.

Aus Qiu et al. ist (X. H. Qiu, G. V. Nazin, and W. Ho (2003) Science 299, 542) Z "Vibrationally Resolved Fluorescence Excited with Submolecular Precision" ist die Verwendung der optischen Lumineszenzeigenschaften von Molekülen oder Nanostrukturen zu ihrer spektroskopischen Identifikation bekannt.

In dem veröffentlichen Dokument von Parker et al. (M.-C. Parker, M. C. Davies and S. J. B. Tendler, J. Vac. Sci. Technolog. B14(2), Mar./Apr. 1996, Seiten 1432-1437) "Hydrogen bonding molecules and their effect on scanning tunneling microscope image contrast of covalently immobilized protein molecules" wird Methanol als Kontrastmittel in einem STM verwendet.

In dem veröffentlichen Dokument von Gupta et al. (J. A. Gupta, C. P. Lutz, A. J. Heinrich and D. M. Eigler (2005), Physical reviwe B71, 115416) "Strongly coveragedependent excitation of adsorbed molecular hydrogen" wird die Adsorption vom molekularen Wasserstoff auf einer Oberfläche mit einem STM untersucht. Nachteilig ist es mit keinem dieser bekannten Verfahren möglich, für eine hinreichend diverse Zahl an Proben die atomar-geometrische, chemische Abbildung der Oberflächenstruktur zu ermöglichen. Unabhängig vom Messmodus erlaubt die herkömmliche Rastertunnelmikroskopie nur in Sonderfällen die Abbildung der chemischen oder der atomar-geometrischen Struktur eines Untersuchungsobjekts.
Ein weiterer Nachteil der Rastertunnelmikroskopie ist die fehlende chemische Sensitivität. Dies bedeutet, dass das Verfahren keine Identifikation chemischer Spezies erlaubt, was dazu führt, dass man molekulare Objekte und Oberflächenstrukturen im lateralen Größenbereich bis unter ein Angström zwar abbilden, aber in der Regel nicht chemisch oder andersartig identifizieren kann. Das Rastertunnelmikroskop liefert also keinen klar identifizierbaren Fingerabdruck eines adsorbierten molekularen Objekts oder atomarer Oberflächenstrukturen. Ursache für diesen Mangel ist der bekannte konventionelle Abbildungsmechanismus des Rastertunnelmikroskops.
Aufgabe der Erfindung ist es, ein verbessertes Verfahren zur Untersuchung einer Probe mit einem Rastertunnelmikroskop bereit zu stellen, welches für möglichst viele unterschiedliche Proben die atomar-geometrische, chemische Abbildung der Strukturen ermöglicht. Eine weitere Aufgabe der Erfindung ist es, ein verbessertes Rastertunnelmikroskop zur Untersuchung einer Probe bereit zu stellen.

Die Aufgabe wird gelöst durch das Verfahren gemäß Hauptanspruch 1. Vorteilhafte Ausgestaltungen ergeben sich aus den jeweils hierauf rückbezogenen Unteransprüchen.
Das Verfahren zur Untersuchung einer Probe mit einem Rastertunnelmikroskop ist gekennzeichnet dadurch, dass an mindestens einem Ort auf der Spitze des Rastertunnelmikroskops und / oder der Probe, welcher bei der Bildaufnahme Teil des Tunnelkontakts ist, vor oder während der Bildaufnahme ein Kontrastmittel vorgelegt wird, während an diesem Ort eine Temperatur unterhalb oder gleich der Kondensationstemperatur des Kontrastmittels eingestellt ist.
Dieses Verfahren bewirkt vorteilhaft, dass erstmalig mit Rastertunnelmikroskopie eine atomar-geometrische Abbildung chemischer Strukturen ermöglicht wird. Die atomar-geometrische Abbildung erfolgt dabei mit sehr hoher und bisher ungekannter Sensitivität und Auflösung. Dies verleiht dem Rastertunnelmikroskop damit eine bisher unerreichte strukturelle und chemische Sensitivität. Die Identifikation der atomar-geometrischen Struktur und daraus abgeleitet der chemischen Struktur von molekularen Objekten und atomaren Oberflächenstrukturen anderer Objekte ist unmittelbarer Gegenstand der Erfindung. Das Verfahren erlaubt vorteilhaft die Identifikation von nanoskaligen Objekten anhand ihrer atomar-geometrischen und damit chemischen Struktur.

In einer Ausgestaltung der Erfindung wird während des Verfahrens ein gasförmiges Kontrastmittel vorgelegt. Dies bewirkt besonders vorteilhaft, dass das Kontrastmittel besonders einfach an mindestens einen Ort auf der Spitze des Rastertunnelmikroskops und / oder der Probe, welcher bei der Bildaufnahme Teil des Tunnelkontakts ist, vorgelegt werden kann.

Als Kontrastmittel wird Deuterium (D₂) oder Tritium (T₂) oder HD (Wasserstoff-Deuterium) oder HT (Wasserstoff-Tritium) oder DT (Deuterium-Tritium) oder Helium (He) gewählt. Auch Wasserstoff (H₂) oder ein anderes, vorzugsweise ein bezüglich des Atomgewichts leichtes Gas können gewählt werden. Die Quanteneigenschaften leichter Gase schalten vorteilhaft den Leitwert des Tunnelkontaktes während des Abrasterns der Probe mit großem Kontrast. Es ist denkbar, ein Gemisch aus mehreren dieser genannten Gasspezies vorzulegen.

Auch Neon, O₂, CO, NOₓ, N₂, N₂O, CO₂ sind als Kontrastmittel erfindungsgemäß denkbar.

Im Rahmen der Erfindung wurde erkannt, dass die Verwendung dieser Gase nach Anspruch 7 als Kontrastmittel in der Rastertunnelmikroskopie die atomar-geometrische, chemische Struktur der Probe hervortreten lässt.
Bei Verwendung eines mit Wasserstoff oder einem anderen geeigneten Gas modifizierten Tunnelkontaktes, vorzugsweise in einem Tieftemperatur-Rastertunnelmikroskop, kondensiert das Gas vorteilhaft im Tunnelkontakt des Mikroskops und entfaltet dort die Wirkung als Kontrastmittel, das statt der lokalen elektronischen Zustandsdichte (LDOS), dem bisher bekannten elektronischen Rastertunnelmikroskop-Kontrast, die atomar-geometrische, chemische Struktur des Untersuchungsobjekts klar hervortreten lässt. Dieser neuartige Kontrast wird im Weiteren auch als Scanning Tunneling Hydrogen Microscopy Kontrast, kurz auch als STHM-Kontrast, bezeichnet. Die Spitze des Mikroskops ist während des Verfahrens mit dem Kontrastmittel sensitiviert.

Die optimale Dosismenge des verwendeten Kontrastmittels, das heißt die bereitzustellende Stoffmenge, die zu dem bestmöglichen atomar-geometrischen, chemischen STHM-Kontrast führt, hängt vom verwendeten Mikroskop, der verwendeten Dosiervorrichtung und der beide umgebenden Umgebung, also den eventuell vorhandenen Kühlschilden, der (Vakuum-)Kammer, und so weiter ab. Sie muss einmalig für das Mikroskop ermittelt werden und liefert dann in weiteren Experimenten für den jeweiligen Aufbau zuverlässige Resultate.

Im einfachsten Fall wird die Umgebung des Mikroskops, z. B. die Vakuumkammer, mit einem gasförmigen Kontrastmittel geflutet.

Die für STHM optimalen Werte der Tunnelspannung U und des Tunnelstroms I (Konstantstrommodus) bzw. der Tunnelspannung U und des Tunnelabstands d (Konstantabstandsmodus) hängen von Mikroskop, Tunnelspitze und Probe ab. Alle Werte von U und I, die herkömmliche elektronische STM Bilder erlauben, können als Anfangswerte auch für das erfindungsgemäße STHM-Verfahren verwendet werden. Wenn für eine bestimmte Kombination aus Mikroskop, Tunnelspitze und Probe optimierte Werte bekannt sind, kann das Rastern im STHM Modus direkt mit diesen Werten begonnen werden.

Die Konzentration des Gases im Bereich des Tunnelkontakts kann während der laufenden Messungen angepasst werden. Sie kann gering gewählt werden.

Als Probe kann insbesondere ein kondensiertes Objekt gewählt werden.

Die im Anschluss hieran erfolgenden Bildaufnahmen weisen einen Kontrast auf, welcher die atomar-geometrische, chemische Struktur der Probe aufzeigt. Auf diese Weise können sehr diverse Objekte und Oberflächenstrukturen anhand ihrer atomar geometrischen, chemischen Struktur identifiziert werden.

Insbesondere während des Beginns des Verfahrens werden während eines Zeitraums Bilder und I/U-Kennlinien sowie Spektren, das heißt dI/dU oder höhere Ableitungen des Tunnelstroms I nach der Tunnelspannung U als Funktion von U, aufgenommen. Besonders vorteilhaft bewirkt dies, dass anhand der Bilder, Kennlinien und Spektren entschieden werden kann, wann die Eigenschaften des Tunnelkontaktes sich durch die Zugabe des Kontrastmittels so geändert haben, dass statt der lokalen elektronischen Zustandsdichte die atomar-geometrische, chemische Struktur sichtbar wird.

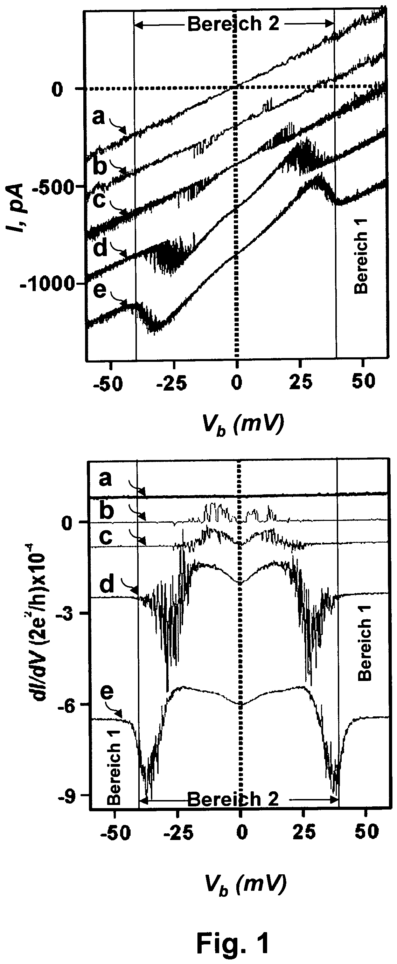

Es werden insbesondere dann Bilder mit verbessertem Kontrast aufgenommen, wenn in den I/U-Kennlinien symmetrisch um die Tunnelspannung 0 mV Nichtlinearitäten, z. B. zero bias anomaly und negativer differentieller Leitwert (vergleiche Figur 1), auftreten. Anhand der Nichtlinearitäten wird festgestellt, dass der Tunnelkontakt in einem Zustand ist, der den atomar-geometrischen, chemischen Kontrast der Probe ermöglicht. Zuverlässige Indikatoren des Zustands des Tunnelkontaktes, der die erfindungsgemäße Rastertunnelmikroskopie erlaubt, sind scharfe, nach unten weisende Peaks negativen differentiellen Leitwerts, die in den dI/dU-Spektren symmetrisch verteilt um die Tunnelspannung 0 mV erscheinen, oder die zero bias anomaly, d.h. der Abfall (wie in Figur 1) oder Anstieg des Leitwerts zur Tunnelspannung 0 mV hin. Die Tunnelspannungen U_{NDC} (ndc = negative differential conductance), bei denen die Peaks negativen differentiellen Leitwerts vorkommen, variieren insbesondere zwischen etwa 10 und 50 mV, in anderen Fällen bis zu 100 mV und darüber. Für bestimmte Tunnelabstände d können die Peaks dabei auch nach oben weisen.

Das Verfahren wird vorteilhaft durchgeführt, wenn der Tunnelkontakt abhängig von der Tunnelspannung U entweder in einem niederleitfähigen Zustand (Bereich 1, vergleiche Figur 1) oder in einem hochleitfähigen Zustand (Bereich 2) vorliegt. Mittels der eingestellten Tunnelspannung wird vorteilhaft zwischen der lokalen elektronischen Zustandsdichte und dem atomar-geometrischen, chemischen Kontrast hin- und hergeschaltet, und damit die elektronische und die atomar-geometrische Struktur ein- und desselben Untersuchungsobjekts deckungsgleich gemessen.

In einer weiteren, besonders vorteilhaften Ausgestaltung der Erfindung werden die Bildaufnahmen bei einer kleinen Tunnelspannung von etwa -100 mV bis etwa +100 mV durchgeführt. In diesem Spannungsbereich ist der atomar-geometrische, chemische Kontrast besonders gut sichtbar.

Für die Aufnahme der Bilder wird entweder der Konstantstrom-Modus oder der Konstantabstand-Modus gewählt. In Abhängigkeit von den Erfordernissen des Experiments können beide konventionellen Modi mit ihren bekannten Vorteilen verwendet werden.

Die Bilder können durch die Geometrie der Tunnelspitze auch während des Verfahrens optimiert werden. Weiterhin können die Bilder auch anhand der I/U-Kennlinien und anhand der dI/dU-Spektren optimiert werden.

Ebenfalls können Bilder durch Verwendung des bekannten spektroskopischen Abbildungsmodus der Rastertunnelmikroskopie, d.h. der Abbildung von Ableitungen des Tunnelstroms I nach der Tunnelspannung U, aufgenommen werden.

Gemäß des Nebenanspruchs weist ein Rastertunnelmikroskop zur Durchführung des Verfahrens eine Zuleitung für ein Kontrastmittel an den Bereich der Spitze und / oder in den Bereich des Probenhalters, auf. Dies bewirkt vorteilhaft, dass das Kontrastmittel direkt in den Bereich des Tunnelkontaktes eingeleitet und dort vorgelegt werden kann, ohne das es in anderen Bereichen oder Orten möglicherweise ungewollte Wirkungen entfaltet.

Mittels einer Zuleitung, insbesondere einer heizbaren Kapillare mit einer Düse, kann das Kontrastmittel gasförmig bis zur Düse gebracht werden und kondensiert erst in unmittelbarer Umgebung der Probe bzw. Spitze. Oder man kann das Kontrastmittel in der Kapillare einfrieren und durch kontrolliertes Heizen sehr fein dosiert in die Spitzenregion einbringen.

An der Austrittsöffnung der Zuleitung bzw. Kapillare ist das Mikroskop vorteilhaft als Tieftemperaturrastertunnelmikroskop ausgeführt. Dadurch wird vorteilhaft nur der unmittelbar notwendige Bereich der gesamten Versuchsanordnung bzw. des Mikroskops gekühlt. Als Kühlmittel werden Kryostate und andere geeignete Mittel zur lokalen Erzeugung einer Temperatur unterhalb der Kondensationstemperatur des verwendeten Kontrastmittels angeordnet.

Im Weiteren wird die Erfindung anhand von Ausführungsbeispielen und der beigefügten Figuren erläutert, ohne dass dies zu einer Einschränkung des Erfindungsgedankens führen soll.

### Erstes Ausführungsbeispiel:

In einem Tieftemperatur-Rastertunnelmikroskop mit einer Basistemperatur unterhalb der Kondensationstemperatur des verwendeten Gases als Kontrastmittel, wird die Tunnelspitze durch die Grobannäherung des Mikroskops in den Tunnelkontakt mit der Oberfläche gebracht und gegebenenfalls für den folgenden Schritt mittels der z-Piezokeramik zurückgezogen.

Durch eine geeignete Vorrichtung wird gasförmig das Gas in den Tunnelkontakt eingebracht, so dass es an den kalten Oberflächen des Tunnelmikroskops zu kondensieren beginnt, bis es schließlich nach der Zeit t₁ nach Beginn der Gaszufuhr die Eigenschaften des Tunnelkontaktes so verändert, dass STHM Bilder mit dem oben beschriebenen atomar-geometrischen, chemischen Kontrast aufgenommen werden können. Nach der Zeit t₁+Δ (mit 0≤Δ<<t₁) wird die Zufuhr von Gas in den Tunnelkontakt beendet.

Um diesen Zeitpunkt t₁ zu bestimmen, wird folgendes Verfahren angewendet:
(1) Die Spitze wird durch die z-Piezokeramik bei eingestellter Tunnelspannung U in den Tunnelkontakt mit der Oberfläche gebracht, bis der Tunnelstrom den eingestellten Sollwert I erreicht. Das Wertepaar (U, I) definiert einen bestimmten Abstand d der Spitze von der Probe (Tunnelabstand). Dieser hängt von der Beschaffenheit der Probe, der Spitze und der lateralen Position Spitze über der Probe ab.
(2) Die Rückkoppelschleife (Feed-Back-Loop) wird geöffnet.
(3) Es werden in geeignetem zeitlichen Abstand von wenigen Sekunden bis Minuten bei konstantem Spitzenabstand I/U-Kennlinien oder dI/dU-Spektren im Bereich ca. U=-100 mV bis 100 mV aufgezeichnet. Während dieser Zeit kann weiterhin Gas an den kalten Oberflächen des Rastertunnelmikroskops kondensieren.

Nach der Zeit t₁ verändern sich die I/U-Kennlinie und das dI/dU-Spektrum. Dies signalisiert eine Veränderung des Tunnelkontaktes. Typische Kennlinien und Spektren vor und nach der Veränderung sind in der Figur 1 gezeigt.

Zuverlässige Indikatoren des Zustands des Tunnelkontaktes, der den STHM-Kontrast erlaubt, sind die scharfen, nach unten weisenden Peaks negativen differentiellen Leitwerts, die in den dI/dU-Spektren symmetrisch verteilt um Tunnelspannung 0 mV erscheinen. Die Tunnelspannungen U_{NDC}, bei denen sie vorkommen, variieren zwischen ca. 10 und 50 mV, in selteneren Fällen bis zu 100 mV und darüber. Für bestimmte Tunnelabstände d können die Peaks auch nach oben weisen.

Nach der Veränderung der I/U-Kennlinien und dI/dU-Spektren können STHM-Bilder aufgenommen werden. Zu diesem Zweck wird die Spitze bei kleiner Tunnelspannung U lateral über die Probe gerastert.

Zwei Betriebsmodi des STM können verwendet werden: der Konstantstrom-Modus (constant current mode) und der Konstantabstand-Modus (constant height mode).

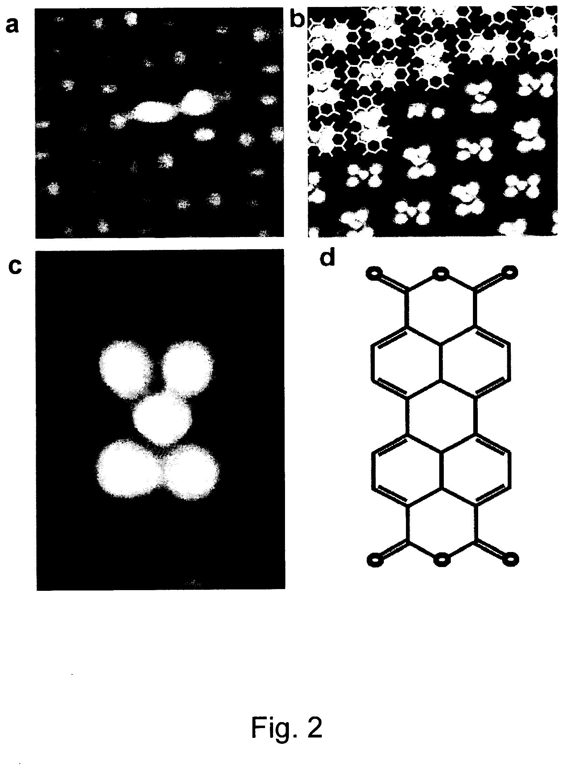

Die STHM Bilder zeigen einen gegenüber dem konventionellen STM veränderten Kontrast (vergleiche Figur 2). Zur Optimierung der STHM Bilder können nun, wie auch bei STM üblich, Tunnelspannung U und Stromsollwert I im Konstantstrom-Modus oder Tunnelspannung U und Tunnelabstand d im Konstantabstand-Modus variiert werden, um für die jeweilige Probe, Spitze und das jeweilige Mikroskop ein optimales Abbildungsergebnis zu erhalten. Ein weiterer Parameter, mit dem STHM Bilder optimiert werden können, ist die Geometrie der Tunnelspitze. Die Optimierung der STHM Bilder kann auch die I/U-Kennlinien und dI/dU-Spektren weiter verändern.

Ebenfalls können STHM Bilder durch Verwendung des bekannten Verfahrens der sogenannten spektroskopischen Abbildung von Ableitungen des Tunnelstroms I nach der Tunnelspannung U aufgenommen werden.

Wenn der chemische, atomar-geometrische Kontrast des STHM und die charakteristischen I/U-Kennlinien und dI/dU-Spektren des STHM verloren gehen, kann durch einfaches Weiterrastern auf der Probenoberfläche der chemische, atomar-geometrische STHM Kontrast zusammen mit den charakteristischen I/U-Kennlinien und dI/dU-Spektren des STHM innerhalb eines Zeitraums von Sekunden bis Minuten wiederhergestellt werden. Wenn beide nicht spontan zurückkehren, kann erneut Gas in den Tunnelkontakt dosiert werden.

Wenn der chemische, atomar-geometrische STHM Kontrast verloren geht, die charakteristischen I/U-Kennlinien und dI/dU-Spektren des STHM jedoch verbleiben, kann der atomar-geometrische, chemische STHM Kontrast durch Optimierung der Tunnelspitzengeometrie zurück gewonnen werden.

Durch Veränderung der Tunnelspannung U kann zwischen dem elektronischen STM Kontrast und dem atomar-geometrischen, chemischen STHM Kontrast beliebig oft hin und her geschaltet werden. Für Tunnelspannungen U mit -|U_{NDC}| < U < |U_{NDC}| (Bereich 2) werden STHM-Bilder beobachtet, wobei der klarste atomar-geometrische, chemische STHM Kontrast bei Tunnelspannungen U≈0 mit |U|<<|U_{NDC}| beobachtet wird. Im Bereich -|U_{NDC}| < U < |U_{NDC}| mit U≠0 und |U|≤≈|U_{NDC}| können die Bilder reichhaltige zusätzliche Information über die Probenoberfläche enthalten. Für Tunnelspannungen U< -|U_{NDC}| oder U> |U_{NDC}| (Bereich 1) beobachtet man herkömmliche Bilder des elektronischen STM Kontrasts (LDOS). Schalten der Tunnelspannung U zwischen den Bereichen 1 und 2 erlaubt den direkten Vergleich von atomar-geometrischer, chemischer sowie elektronischer Struktur derselben Probenoberfläche. Bilder der elektronischen sowie der atomar-geometrischen, chemischen Struktur können auch durch Schalten der Tunnelspannung U zwischen den Bereichen 1 und 2 an jedem Bildpunkt auch parallel aufgenommen werden.
Die optimale Dosismenge des verwendeten Gases, das heißt die bereitzustellende Stoffmenge, die zu dem bestmöglichen atomar-geometrischen, chemischen STHM Kontrast führt, hängt vom verwendeten Mikroskop, der verwendeten Dosiervorrichtung und der beide umgebenden Umgebung, z. B. eventuell vorhandener Kühlschilde, Vakuum-Kammer und so weiter ab. Sie müssen einmalig ermittelt werden und liefern dann in weiteren Experimenten für den jeweiligen Aufbau zuverlässige Resultate.
Die für STHM optimalen Werte der Tunnelspannung U und des Tunnelstroms I (Konstantstrommodus) bzw. der Tunnelspannung U und des Tunnelabstands d hängen von Mikroskop, Tunnelspitze und Probe ab. Alle Werte von U und I, die herkömmliche elektronische STM Bilder erlauben, können als Anfangswerte für STHM verwendet werden. Wenn für eine bestimmte Kombination Mikroskop, Tunnelspitze und Probe optimierte Werte bekannt sind, kann das Rastern im STHM Modus direkt mit diesen Werten begonnen werden.

Das Beispiel von Figur 1 und das zweite Ausführungsbeispiel von Figur 2 umfassen das Verfahren nach dem ersten Ausführungsbeispiel. Zusätzlich gilt:
Es wurde ein Ultrahochvakuum-Tieftemperatur-Rastertunnelmikroskop mit ⁴He-Badkryostaten und zwei geschlossenen Kühlschilden des Fabrikats Createc verwendet. Dieses weist ein äußeres Kühlschild bei 77 K, und inneres Kühlschild bei 4,2 K in einer Ultrahochvakuumkammer auf.

Als Dosiervorrichtung wurde ein Gaseinlass mit handbetriebenem Dosierventil an der Ultrahochvakuumkammer, in der sich die Kühlschilde und das Mikroskop befinden, verwendet.

Die Spitze wurde mittels der z-Piezokeramik zurückgezogen, so dass das Gasventil betätigt werden konnte, ohne dass es bei der Betätigung durch mechanische Erschütterung zum Tip-Crash kommt. Wenn gewährleistet ist, dass die Betätigung des Ventils zu keiner mechanischen Störung führt, kann alternativ die Spitze während des folgenden Schritts auch im Tunnelkontakt belassen werden.

Während des Dosiervorgangs waren die Pumpen an der Ultrahochvakuumkammer ausgeschaltet.

Das Dosierventil wurde so weit geöffnet, dass der in der Ultrahochvakuumkammer gemessene Druck auf den Wert p ansteigt. Während des Dosiervorgangs waren die Klappen mit etwa 5 mm Durchmesser in beiden Kühlschilden geöffnet, so dass das Gas ungehindert zum Mikroskop strömen konnte. Sofort nach der Zeit t₁ wurde das Dosierventil geschlossen.

Nach dem Schließen des Dosierventils wurde die Tunnelspitze mittels der z-Piezokeramik in den Tunnelkontakt mit der Probe gefahren.

### Für Figur 1 gilt im Besonderen:

p=6,4×10⁻⁹ mbar, t₁=6,5 h. Als Gas wurde Wasserstoff (H₂) verwendet. Probe ist PTCDA/Ag(111). PTCDA ist 3, 4, 9, 10-Perylentetracarbonsäure-Dianhydrid.

Die Kennlinien im oberen Bildabschnitt der Figur 1 sind vertikal auf der Y-Achse nach unten um folgende Werte verschoben: Kennlinie a = 0 pA, Kennlinie b = 200 pA, Kennlinie c = 400 pA, Kennlinie d = 600 pA, Kennlinie e = 800pA. Im unteren Bildabschnitt der Figur 1 sind die ebenfalls versetzen dI/dU-Spektren gezeigt. Die Spektren b-e sind vertikal auf der Y-Achse nach unten verschoben. Unverschoben zeigen alle Spektren b-e bei Biasspannungen kleiner -50 mV und größer + 50 mV den Wert des unverschobenen Spektrums a.

Die obere Kennlinie a und das obere Spektrum a sind vor Einlass des Wasserstoffs aufgenommen worden. Die Kennlinie b und das Spektrum b wurde bei der Zeit t₁ aufgenommen (s.o.). Die Kennlinie c und das Spektrum c wurde bei t₁+22 min aufgenommen. Die Kennlinie d und das Spektrum d wurde aufgenommen bei t₁+80 min. Die Kennlinie e und das Spektrum e wurde aufgenommen bei t₁+14 h. Alle Kurven wurden zentral über einem PTCDA Molekül aufgenommen. Vor dem Messen der Spektren wurde die Tunnelspitze bei U=-0,340 V, I=0,1 nA stabilisiert.

### Für Figur 2 gilt im Besonderen:

p=3×10⁻⁸ mbar, t₁=1 min. Als Gas wurde Deuterium (D₂) verwendet. Probe ist PTCDA/Ag(111).
(a) 5x5 nm² Konstantstrombild mit herkömmlichen elektronischem STM Kontrast, aufgenommen mit I=1 nA, U=-0,340 V.
(b) 5×5 nm² Konstantabstand-dI/dV-Bild der Probenfläche aus (a), aufgenommen mit dem atomar-geometrischen, chemischen STHM Kontrastmodus. Vor Aufnahme des Bildes wurde die Tunnelspitze mit einer Tunnelspannung von U=-0,010V und einem Tunnelstrom I =1 nA in Tunnelkontakt mit der Probenoberfläche gebracht. Die Tunnelspannung bei Aufnahme des Bildes betrug U=0 mV. Das Bild wurde mit einem Lock-in-Amplifier aufgenommen (Modulationsamplitude 4 mV, Modulationsfrequenz 626 Hz). In der oberen linken Ecke ist die gerechnete atomare Struktur von PTCDA/Ag(111) eingeblendet.
(c) Vergrößerter Ausschnitt aus (b), 1×1,5 nm².
(d) Strukturformel der abgebildeten PTCDA Moleküle.

Es ist denkbar, dass ein Schalter, welcher die angegebenen Nichtlinearitäten erzeugt, ausreichend ist, auch ohne Kontrastmittel den atomar-geometrischen, chemischen STHM-Kontrast zu ermöglichen.

## Patentansprüche

1. Verfahren zur Untersuchung einer Probe mit einem Rastertunnelmikroskop, wobei an mindestens einem Ort auf der Spitze des Rastertunnelmikroskops und/oder an mindestens einem Ort der Probe, welcher bei der Bildaufnahme Teil des Tunnelkontakts ist, vor oder während der Bildaufnahme ein Kontrastmittel vorgelegt wird, während an diesem Ort eine Temperatur unterhalb oder gleich der Kondensationstemperatur des Kontrastmittels, die die Temperatur bei dem in der Vakuumkammer gemessenen Druck p ist, in der sich das Rastertunnelmikroskop befindet, eingestellt ist, wobei durch Wahl von Neon, O₂, CO, NOₓ, N₂, N₂O, CO₂ als Kontrastmittel bzw. durch Wahl von Deuterium (D₂) oder Tritium (T₂) oder HD (Wasserstoff- Deuterium) oder HT (Wasserstoff- Tritium) oder DT (Deuterium- Tritium) oder Helium (He) als Kontrastmittel die atomar- geometrische, chemische Struktur der Probe hervortritt.

2. Verfahren nach Anspruch 1,
**gekennzeichnet durch**
Wahl eines gasförmigen Kontrastmittels.

3. Verfahren nach einem der vorhergehenden Ansprüche,
bei dem während eines Zeitraums Bilder und I/U- Kennlinien bzw. Spektren, das heißt dl/dU oder höhere Ableitungen des Tunnelstroms I nach der Tunnelspannung U, aufgenommen werden.

4. Verfahren nach einem der vorhergehenden Ansprüche,
bei dem Bilder aufgenommen werden, wenn in den I/U- Kennlinien symmetrisch verteilt um die Tunnelspannung 0 mV Nichtlinearitäten auftreten.

5. Verfahren nach einem der vorhergehenden Ansprüche,
bei dem gleichzeitig Bilder mit einem atomar- geometrischen, chemischen Kontrast und einem elektronischen Kontrast aufgenommen werden.

6. Verfahren nach einem der vorhergehenden Ansprüche,
**dadurch gekennzeichnet, dass**
die Bildaufnahmen bei einer kleinen Tunnelspannung von etwa -100 mV bis etwa +100 mV, insbesondere -50 mV bis +50 mV durchgeführt werden.

7. Verwendung von Deuterium (D₂) oder Tritium (T₂) oder HD (Wasserstoff- Deuterium) oder HT (Wasserstoff- Tritium) oder DT (Deuterium- Tritium) oder Helium (He) als Kontrastmittel in der Rastertunnelmikroskopie, wobei das Kontrastmittel unterhalb der Kondensationstemperatur vorliegt, die die Temperatur bei dem in der Vakuumkammer gemessenen Druck p ist, in der sich das Rastertunnelmikroskop befindet.

## Claims

1. Method for examining a sample with a scanning tunnelling microscope, in which a contrast agent is provided at at least one place on the tip of the scanning tunnelling microscope and/or at least one place on the sample, which is part of the tunnel contact, when images are recorded, before or whilst images are recorded, whilst at this place a temperature is set below or equal to the condensation temperature of the contrast agent, which is the temperature at the pressure p measured in the vacuum chamber, where the scanning tunnelling microscope is located,
in which
by selecting neon, O₂, CO, NOₓ, N₂, N₂O or CO₂ as the contrast agent or by selecting deuterium (D₂) or tritium (T₂) or HD (hydrogen deuterium) or HT (hydrogen tritium) or DT (deuterium tritium) or helium (He) as the contrast agent the atomic-geometric, chemical structure of the sample emerges.

2. Method according to claim 1,
**characterised by**
the selection of a gaseous contrast agent.

3. Method according to one of the previous claims,
in which images and I/U characteristic curves or spectra, that is to say dl/dU or higher derivations of the tunnel current I according to the tunnel voltage U, are recorded during a period of time.

4. Method according to one of the previous claims,
in which images are recorded, if non-linearities occur around the tunnel voltage 0 mV distributed symmetrically in the I/U characteristic curves.

5. Method according to one of the previous claims,
in which images are recorded with an atomic-geometric, chemical contrast and an electronic contrast at the same time.

6. Method according to one of the previous claims,
**characterised in that**
the recording of images is carried out at a low tunnel voltage of about -100 mV to about +100 mV, particularly -50 mV to +50 mV.

7. Use of deuterium (D₂) or tritium (T₂) or HD (hydrogen deuterium) or HT (hydrogen tritium) or DT (deuterium tritium) or helium (He) as the contrast agent in scanning tunnelling microscopy, in which the contrast agent is below the condensation temperature, which is the temperature at the pressure p measured in the vacuum chamber, where the scanning tunnelling microscope is located.

## Revendications

1. Procédé d'examen d'un échantillon au microscope à balayage à effet tunnel, dans lequel, en au moins un emplacement sur la pointe du microscope à balayage à effet tunnel et/ou sur au moins un emplacement de l'échantillon, qui, à la prise de vue, fait partie du contact de tunnel, on met, avant ou pendant la prise de vue, un agent de contraste, tandis que l'on établit en cet emplacement une température inférieure ou égale au point de condensation de l'agent de contraste, qui est la température, à la pression p mesurée dans la chambre à vide, à laquelle se trouve le microscope à balayage à effet tunnel,
dans lequel, en choisissant du néon O₂, CO, NOₓ, N₂, N₂O, CO₂ comme agent de contraste ou en choisissant du deutérium (D₂) ou du tritium (T₂) ou du HD (hydrogène-deutérium) ou du HT (hydrogène-tritium) ou du DT (deutérium-tritium) ou de l'hélium (He) comme agent de contraste, la structure géométrique atomique, chimique de l'échantillon ressort.

2. Procédé suivant la revendication 1,
**caractérisé par**
un choix d'un agent de contraste gazeux.

3. Procédé suivant l'une des revendications précédentes,
dans lequel, pendant un laps de temps, on enregistre des images et des courbes caractéristiques intensité/tension ou des spectres, à savoir dI/dU, ou des dérivés supérieures du courant I tunnel en fonction de la tension U tunnel.

4. Procédé suivant l'une des revendications précédentes,
dans lequel on enregistre des images, si apparaît, dans les courbes caractéristiques intensité/tension, de manière répartie symétriquement, des non-linéarités autour de la tension tunnel 0 mV.

5. Procédé suivant l'une des revendications précédentes,
dans lequel on enregistre en même temps des images ayant un contraste en géométrie atomique, chimique et un contraste électronique.

6. Procédé suivant l'une des revendications précédentes,
**caractérisé en ce que**
l'on effectue la prise de vue à une tension tunnel basse d'environ -100 mV à environ +100 mV, notamment de -50 mv à +50 mV.

7. Utilisation du deutérium (D₂) ou du tritium (T₂) ou du HD (hydrogène-deutérium) ou du HT (hydrogène-tritium) ou du DT (deutérium-tritium) ou de l'hélium (He) comme agent de contraste dans la microscopie à balayage à effet tunnel, l'agent de contraste présentant en dessous du point de condensation, qui est la température, à la pression p mesurée dans la chambre à vide, à laquelle se trouve le microscope à balayage à effet tunnel.
